# EUROPEAN PATENT SPECIFICATION

(11) **EP 3 530 928 B1**
(45) Date of publication and mention of the grant of the patent: **22.09.2021**
(21) Application number: 18213871.9
(22) Date of filing: 19.12.2018
(51) Int. Cl.: F02K 3/06, F01D 15/10, F02K 5/00

(54) **HYBRID TURBINE JET ENGINES AND METHODS OF OPERATING THE SAME**
HYBRIDTURBINENSTRAHLTRIEBWERK UND VERFAHREN ZUM BETRIEB DAVON
MOTEURS À RÉACTION A TURBINE HYBRIDES ET PROCÉDÉS DE FONCTIONNEMENT CORRESPONDANT

(30) Priority: 26.02.2018 US 201815904838
(43) Date of publication of application: 28.08.2019
(73) Proprietor: The Boeing Company, Chicago, IL 60606-1596 (US)
(72) Inventor: BARMICHEV, Sergey D., Chicago, IL 60606-1596 (US); HOWE, Mark E., Chicago, IL 60606-1596 (US); BROWN, Stephen T., Chicago, IL 60606-1596 (US)
(74) Representative: Sandri, Sandro

(56) References cited:
- EP-A1- 3 335 995
- WO-A2-2010/067172
- US-A1- 2010 107 652
- US-A1- 2010 327 109
- US-A1- 2016 363 050
- US-A1- 2018 003 072

## Description

### FIELD

The present disclosure relates generally to hybrid turbine jet engines and to methods of operating hybrid turbine jet engines.

### BACKGROUND

Turbine jet engines may be utilized to power and/or to convey an aircraft, such as an airplane. Such turbine jet engines rely upon gas expansion, from combustion of a fuel, to provide a motive force for rotation of one or more compressors and/or turbines. As such, turbine jet engines may require a constant supply of fuel and may combust, or consume, the fuel continuously during operation thereof.

While turbine jet engines may be highly effective at generating thrust, there may be inefficiencies associated with operation thereof. As an example, the turbine jet engine must be sized for a maximum needed thrust, such as may be utilized during acceleration of an aircraft that utilizes the turbine jet engine, during take-off of the aircraft, and/or during an engine-out condition of the aircraft. As such, an operational efficiency of the turbine jet engine at constant, or cruise, speeds may be less than otherwise would be possible were the turbine jet engine sized for constant speeds. As another example, during deceleration of the aircraft, kinetic energy of the aircraft may be lost. As yet another example, during descent of the aircraft, potential energy of the aircraft may be lost. This lost kinetic and/or potential energy generally is not recovered and represents a loss of energy that initially was utilized to accelerate the aircraft and/or to attain a given altitude, respectively.

The above-discussed sizing constraints and/or energy losses represent inefficiencies in current turbine jet engine designs and are unaddressed by current hybrid engine designs. Thus, there exists a need for improved hybrid turbine jet engines and for methods of operating the improved hybrid turbine jet engines.

Document WO 20107067172 A1 describes an apparatus and method for energy recovery on jet-powered airplanes on approach for landing, where a fan is uncoupled from the compression and turbine section applying a secondary planetary gear set, and therewith connected to a starter/generator unit to produce power that might be stored in capacitors or batteries for re-use.

Document US 2010/0107652 A1 discloses a hybrid propulsive technique, comprising providing at least some first thrust associated with a flow of a working fluid through at least a portion of an at least one axial flow jet engine. The hybrid propulsive technique includes extracting energy at least partially in the form of electrical power from the working fluid, and converting at least a portion of the electrical power to torque. The hybrid propulsive technique further includes rotating an at least one substantially axial-flow independently rotatable compressor rotor at least partially responsive to the converting the at least a portion of the electrical power to torque.

Document US 201070327109 A1 discloses a method an system for taxiing an aircraft. The system is used for axing an aircraft and comprises at least one multi-spool gas turbine engine, the engine having an electrical motor in a torque-driving engagement with a low pressure spool of the engine. The low pressure spool has a propulsor connected thereon to generate thrust when rotated. A controller is connected to the electrical motor and an electrical power source to control an amount of electrical power provided from the power source to the electrical motor so as to drive the propulsor and cause at least a major portion of the thrust to be generated by the propulsor for moving the aircraft during taxiing.

Document US 2018/0003072 A1 discloses a gas turbine engine including a core having a compressor section with a first compressor and a second compressor, a turbine section with a first turbine and a second turbine, and a primary flow path fluidly connecting the compressor section and the turbine section. The first compressor is connected to the first turbine via a first shaft, the second compressor is connected to the second turbine via a second shaft, and the motor is connected to the first shaft such that rotational energy generated by the motor is translated to the first shaft.

### SUMMARY

A hybrid turbine engine having the features described in claim 1 is disclosed herein. Dependent claims 2-11 outline advantageous forms of embodiment thereof.

Moreover, claim 12 discloses a method of operating a hybrid turbine engine. Dependent claims 13 and 14 disclose advantageous ways of carrying out such method.

### BRIEF DESCRIPTION OF THE DRAWINGS

Fig. 1 is an illustration of an aircraft that may include and/or utilize hybrid turbine engines and/or methods, according to the present disclosure.
Fig. 2 is a schematic cross-sectional view illustrating examples of a hybrid turbine engine according to the present disclosure.
Fig. 3 is a less schematic cross-sectional view illustrating an example of a hybrid turbine engine according to the present disclosure.
Fig. 4 is a less schematic cross-sectional view illustrating an example of a hybrid turbine engine according to the present disclosure.
Fig. 5 is a front view of the hybrid turbine engine of Fig. 4.
Fig. 6 is a cross-sectional view of a portion of the hybrid turbine engine of Figs. 4-5 taken along line 6-6 of Fig. 4.
Fig. 7 is a less schematic cross-sectional view illustrating an example of a hybrid turbine engine according to the present disclosure.
Fig. 8 is a less schematic cross-sectional view illustrating an example of a hybrid turbine engine according to the present disclosure.
Fig. 9 is a flowchart depicting methods, according to the present disclosure, of operating a hybrid turbine engine.
Fig. 10 is a chart illustrating examples of operational modes of a hybrid turbine engine, according to the present disclosure.

### DESCRIPTION

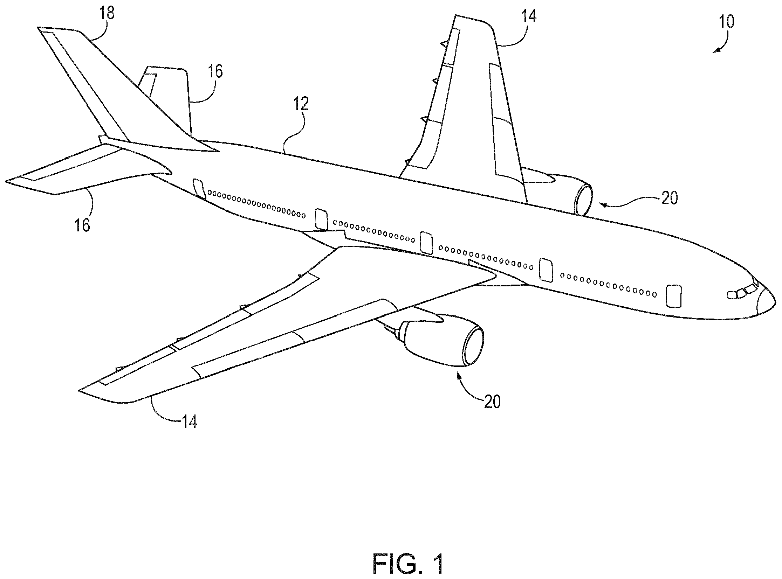

Figs. 1-9 provide illustrative, non-exclusive examples of hybrid turbine engines 20, methods 200 of operating the hybrid turbine engines, and/or of aircraft 10 that may include and/or utilize hybrid turbine engines 20 and/or methods 200, according to the present disclosure. Elements that serve a similar, or at least substantially similar, purpose are labeled with like numbers in each of Figs. 1-9, and these elements may not be discussed in detail herein with reference to each of Figs. 1-9. Similarly, all elements may not be labeled in each of Figs. 1-9, but reference numerals associated therewith may be utilized herein for consistency. Elements, components, and/or features that are discussed herein with reference to one or more of Figs. 1-9 may be included in and/or utilized with any of Figs. 1-9 without departing from the scope of the present disclosure.

In general, elements that are likely to be included in a given (i.e., a particular) embodiment are illustrated in solid lines, while elements that are optional to a given embodiment are illustrated in dashed lines. However, elements that are shown in solid lines are not essential to all embodiments, and an element shown in solid lines may be omitted from a given embodiment without departing from the scope of the present disclosure.

Fig. 1 is an illustration of an aircraft 10 that may include and/or utilize hybrid turbine engines 20 and/or methods 200, according to the present disclosure. Aircraft 10 may include a fuselage 12, one or more wings 14, a horizontal stabilizer 16, and/or a vertical stabilizer 18. Aircraft 10 also includes one or more hybrid turbine engines 20, examples of which are disclosed herein. Examples of aircraft 10 include an airplane, a commercial aircraft, and/or a military aircraft.

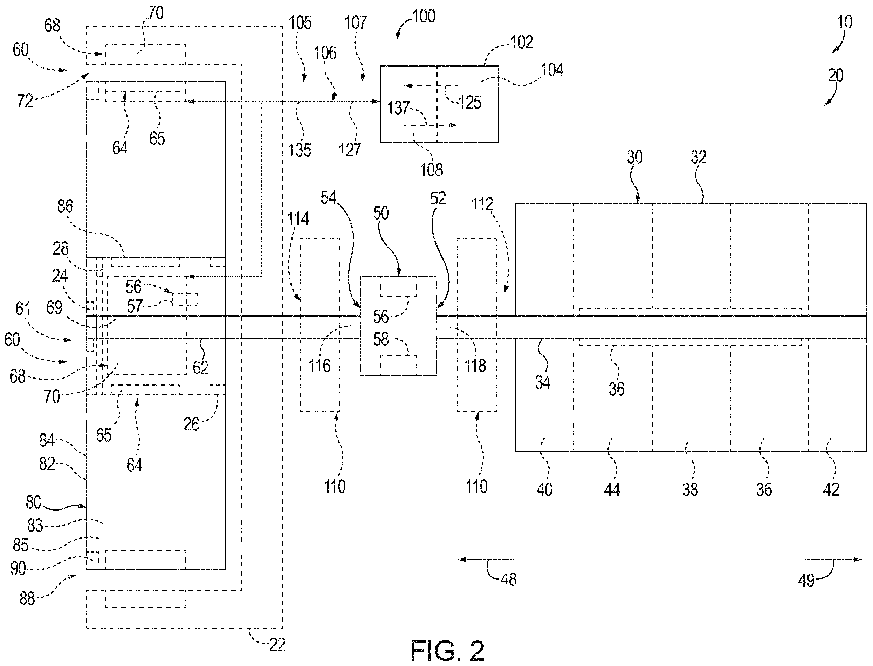

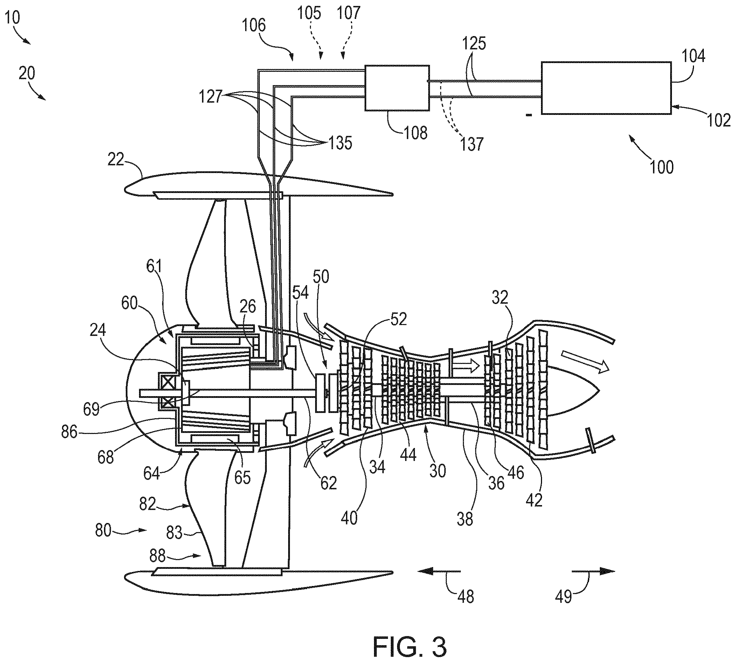

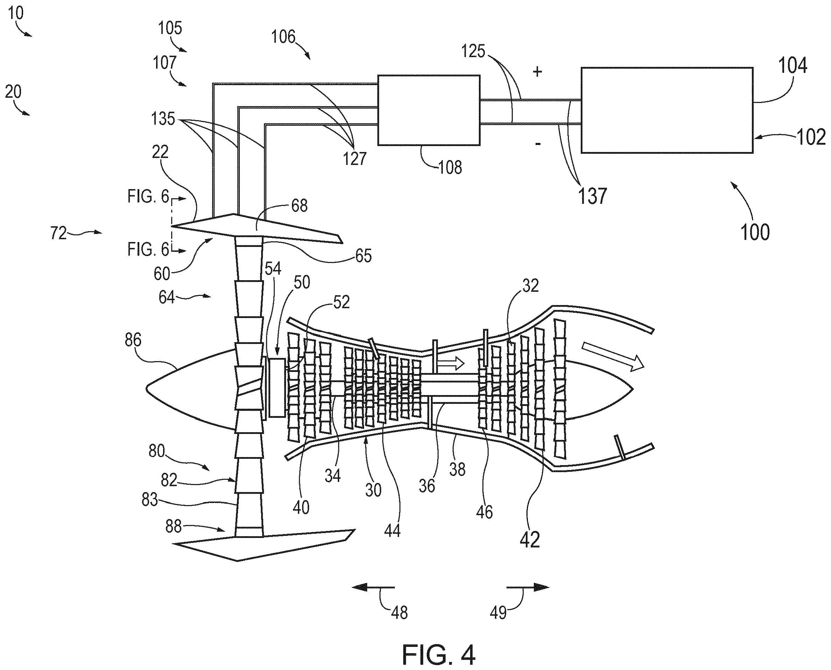

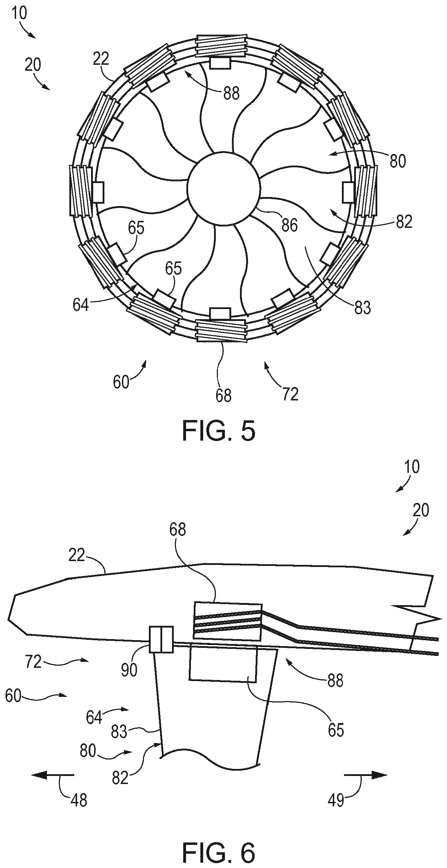

Fig. 2 is a schematic cross-sectional view illustrating examples of a hybrid turbine engine 20 according to the present disclosure. Figs. 3-4 and 7-8 are less schematic cross-sectional views illustrating examples of hybrid turbine engines 20, according to the present disclosure. Fig. 5 is a front view of the hybrid turbine engine of Fig. 4, and Fig. 6 is a cross-sectional view of a portion of the hybrid turbine engine of Figs. 4-5 taken along line 6-6 of Fig. 4.

As illustrated collectively by Figs. 2-8, hybrid turbine engines 20 include a first thrust-generating device 30, which includes a turbine 32 that includes a turbine rotary shaft 34. Hybrid turbine engines 20 also include a clutch 50 including a clutch input 52, which is operatively coupled to turbine rotary shaft 34, and a clutch output 54. Clutch 50 defines a plurality of operational states including at least an engaged state, wherein the clutch input is rotationally coupled to the clutch output, and a disengaged state, wherein the clutch input is rotationally decoupled from the clutch output. Hybrid turbine engines 20 further include a rotary electric machine 60, which includes a machine rotary shaft 62 that is operatively coupled to clutch output 54. Hybrid turbine engines 20 also include a second thrust-generating device 80, which is operatively coupled to machine rotary shaft 62, and electric power system 100.

During operation of hybrid turbine engines 20, and as discussed in more detail herein, first thrust-generating device 30 and/or turbine 32 thereof may be utilized to provide a motive force for rotation of turbine rotary shaft 34. In addition, clutch 50 may be utilized to selectively and rotationally engage, or disengage, turbine rotary shaft 34 and machine rotary shaft 62, thereby selectively providing a motive force for rotation of machine rotary shaft 62.

In addition, rotary electric machine 60 may, or may be configured to, selectively receive an electric power input 105 from electric power system 100. Responsive to receipt of electric power input 105, rotary electric machine 60 may produce and/or generate an output torque that rotates second thrust-generating device 80 via machine rotary shaft 62. Stated another way, electric power system 100 may be utilized to power second thrust-generating device 80 via rotary electric machine 60. Stated yet another way, and responsive to receipt of electric power input 105, rotary electric machine 60 may be utilized to power second thrust-generating device 80. This powering of second thrust-generating device 80 may supplement first thrust-generating device 30, such as when clutch 50 is in the engaged state. Alternatively, this powering of second thrust-generating device 80 may be independent of first thrust-generating device 30, such as when clutch 50 is in the disengaged state.

Rotary electric machine 60 also may, or may be configured to, selectively receive an input torque from machine rotary shaft 62. Responsive to receipt of the input torque, rotary electric machine 60 may produce and/or generate an electric power output 107, which may be provided to electric power system 100. Stated another way, rotary electric machine 60 may be, or may function as, an electric power source, such as a generator and/or an alternator, that may be utilized to charge, or to recharge, electric power system 100. The generation of electric power output 107 may be powered by first thrust-generating device 30, such as when clutch 50 is in the engaged state and machine rotary shaft 62 receives the input torque from the first thrust-generating device. Additionally or alternatively, the generation of electric power output 107 may be independent of the operation of first thrust-generating device 30, such as when clutch 50 is in the disengaged state and machine rotary shaft 62 receives the input torque from second thrust-generating device 80.

First thrust-generating device 30 may include any suitable turbine 32, or even a turbine assembly, that includes turbine rotary shaft 34 and/or that is configured to generate a first thrust. As an example, and as illustrated in dashed lines in Fig. 2 and in solid lines in Figs. 3-4 and 7-8, turbine rotary shaft 34 may be a low-speed turbine rotary shaft 34 that rotates at a low-speed shaft rotational frequency. Under these conditions, first thrust-generating device 30 also may include a high-speed turbine rotary shaft 36 that rotates at a high-speed shaft rotational frequency. The high-speed shaft rotational frequency may be greater than the low-speed shaft rotational frequency.

First thrust-generating device 30 also may include a combustion chamber 38, which may be configured to receive and to combust a fuel to power the first thrust-generating device. First thrust-generating device 30 further may include a compressor 40, which also may be referred to herein as a low-pressure compressor 40. Compressor 40 may be upstream, or positioned in an upstream direction 48, from combustion chamber 38, may be operatively coupled to turbine rotary shaft 34, and/or may be configured to rotate with the turbine rotary shaft.

First thrust-generating device 30 also may include a turbine 42, which also may be referred to herein as a low-pressure turbine 42. Turbine 42 may be downstream, or positioned in a downstream direction 49, from combustion chamber 38, may be operatively coupled to turbine rotary shaft 34, and/or may be configured to rotate with the turbine rotary shaft.

As illustrated in Figs. 2-4, first thrust-generating device 30 further may include a high-pressure compressor 44. High-pressure compressor 44, when present, may be downstream from low-pressure compressor 40, may be upstream from combustion chamber 38, may be operatively coupled to high-speed turbine rotary shaft 36, and/or may be configured to rotate with the high-speed turbine rotary shaft.

As also illustrated in Figs. 2-4 and 7-8, first thrust-generating device 30 also may include a high-pressure turbine 46. High-pressure turbine 46, when present, may be downstream from combustion chamber 38, may be upstream from low-pressure turbine 42, may be operatively coupled to high-speed turbine rotary shaft 36, and/or may be configured to rotate with the high-speed turbine rotary shaft.

Second thrust-generating device 80 may include any suitable structure that may be operatively coupled to machine rotary shaft 62 and/or that may be configured to generate a second thrust that is independent of the first thrust generated by first thrust-generating device 30. Examples of second thrust-generating device 80 include a fan 82, as illustrated in Figs. 2-6, and/or a propeller 84, as illustrated in Figs. 2 and 7-8. Fan 82, when present, may include a plurality of fan blades 83. Propeller 84, when present, may include a plurality of propeller blades 85. When second thrust-generating device 80 includes fan 82, hybrid turbine engine 20 also may be referred to herein as a turbofan hybrid turbine engine, as a hybrid turbofan engine, and/or as a turbofan engine. When second thrust-generating device 80 includes propeller 84, hybrid turbine engine 20 also may be referred to herein as a turboprop hybrid turbine engine, as a hybrid turboprop engine, and/or as a turboprop engine.

Clutch 50 may include any suitable structure that may be adapted, configured, designed, and/or constructed to include clutch input 52 and clutch output 54, as illustrated in Fig. 2, and/or to define at least the engaged state and the disengaged state. Examples of clutch 50 include an overrunning clutch, a one-way clutch, a one-way tapered clutch, a tooth clutch, and/or a synchronized clutch.

As illustrated in dashed lines in Fig. 2, hybrid turbine engine 20 and/or clutch 50 thereof includes a synchronization structure 56. Synchronization structure 56 is configured to synchronize clutch input 52 and clutch output 54, such as to permit clutch 50 to transition from the disengaged state to the engaged state and/or from the engaged state to the disengaged state while clutch input 52 and/or clutch output 54 rotates. The synchronization structure 56 includes a speed controller 57 configured to control a rotational frequency of rotary electric machine 60 to synchronize the clutch output to the clutch input. This includes synchronization of clutch output 54 to clutch input 52 to the same, or similar, respective rotational frequencies, such as to permit and/or facilitate low-friction engagement and/or disengagement of clutch 50 at any suitable synchronized rotational frequency.

It is within the scope of the present disclosure that clutch 50 may include and/or be an automatic, or an automatically actuated, clutch 50. Such an automatic clutch 50 may be configured to automatically rotationally couple clutch input 52 to clutch output 54 when a clutch input rotational frequency of the clutch input is greater than a clutch output rotational frequency of the clutch output. Such an automatic clutch 50 additionally or alternatively may be configured to automatically rotational decouple clutch input 52 from clutch output 54 when the clutch input rotational frequency is less than the clutch output rotational frequency.

It is also within the scope of the present disclosure that clutch 50 may include and/or be a selectively actuated clutch 50. Such a selectively actuated clutch 50 may be configured to be selectively actuated between the engaged state and the disengaged state, such as by an operator, or by a control system, of hybrid turbine engine 20. This may be accomplished in any suitable manner. As an example, and with continued reference to Fig. 2, clutch 50 may include an engagement structure 58 configured to selectively transition the clutch between the engaged state and the disengaged state. Examples of engagement structure 58 include an actuator, a lever, an electrically actuated engagement structure, a mechanically actuated engagement structure, and/or a hydraulically actuated engagement structure.

Rotary electric machine 60 may include any suitable structure that may include machine rotary shaft 62, that may be configured to receive electric power input 105 and to generate the output torque therefrom, and/or that may be configured to receive the input torque and to generate electric power output 107 therefrom. As examples, rotary electric machine 60 may include and/or be a generator, an alternator, an electric motor, and/or a permanent magnet brushless alternating current (AC) asynchronous axial electric machine.

As an additional example, rotary electric machine 60 may include a rotor 64, as illustrated in Figs. 2-8. Rotor 64, when present, may be operatively attached to and/or may rotate with machine rotary shaft 62 and/or second thrust-generating device 80. As another example, rotary electric machine 60 may include a stator 68. Stator 68, when present, may be operatively attached to an engine case structure 22 of hybrid turbine engine 20.

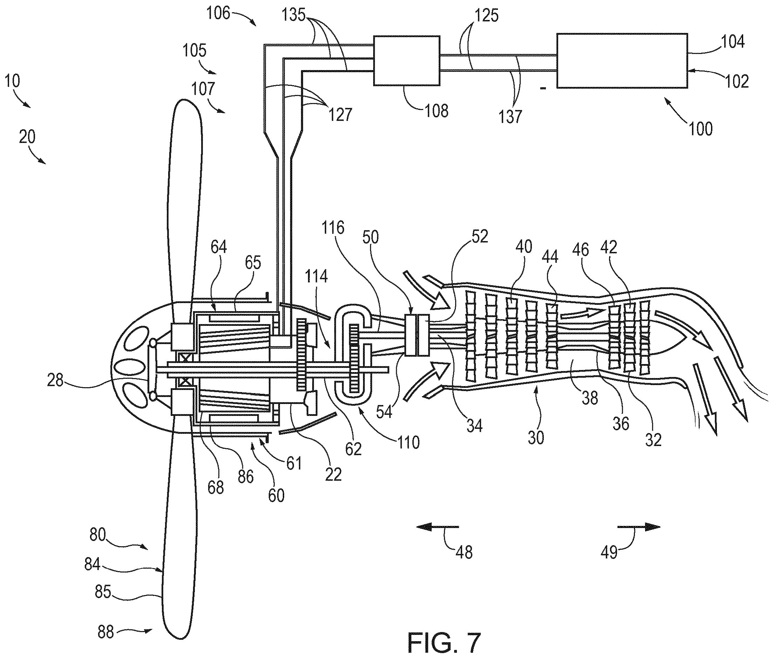

It is within the scope of the present disclosure that machine rotary shaft 62 may be aligned, or axially aligned with turbine rotary shaft 34, as illustrated in Figs. 2-4. Alternatively, it is also within the scope of the present disclosure that machine rotary shaft 62 may be offset, or axially offset, from turbine rotary shaft 34, as illustrated in Figs. 7-8. Machine rotary shaft 62 may be parallel, or at least substantially parallel, to turbine rotary shaft 34.

As illustrated in dashed lines in Fig. 2 and in solid lines in Figs. 3-4 and 7-8, second thrust-generating device 80 may include a central hub 86. As illustrated in Figs. 2-3 and 7-8, at least a portion of rotary electric machine 60 may be internal to, located within, operatively attached to, and/or defined by the central hub. Such a rotary electric machine may be referred to herein as a hub-drive rotary electric machine 61.

As an example, stator 68 of rotary electric machine 60 may be internal to central hub 86. As a more specific example, stator 68 may include a field coil 70 that may be operatively attached to engine case structure 22 and that also may be internal to central hub 86. As illustrated, stator 68 may define a central opening 69, and machine rotary shaft 62 may extend within and/or through the central opening.

Such a configuration may permit and/or facilitate inclusion of a forward bearing 24 in hybrid turbine engine 20. Forward bearing 24 may be forward of, or in upstream direction 48 from, at least a portion of rotary electric machine 60 and/or second thrust-generating device 80 and may be configured to support, or may support, machine rotary shaft 62 and/or central hub 86 on a front, forward, or upstream side of stator 68. Hybrid turbine engine 20 further may include an aft bearing 26, which also may support central hub 86, such as on an aft side of the central hub.

As discussed, rotary electric machine 60 may include rotor 64, and rotor 64 may be configured to rotate relative to stator 68. As illustrated in dashed lines in Fig. 2 and in solid lines in Figs. 3 and 7-8, rotor 64 may include a plurality of magnets 65, which may be operatively attached to central hub 86. Magnets 65, when present, may be positioned between stator 68 and central hub 86, as illustrated. Stated another way, magnets 65 may be internal to, or located within, central hub 86.

Turning to the schematic illustration of Fig. 2 and the more specific illustrations of Figs. 3-6, when second thrust-generating device 80 includes fan 82, fan 82 may include fan blades 83 that may be operatively attached to and/or may extend from central hub 86. Magnets 65, when present, may be operatively attached to and/or may extend from the periphery of fan blades 83 and in positional alignment with stator 68, as illustrated in Figs. 4-6. Stated another way, magnets 65 may be internal to, or located within, fan blade 83 at the peripheral extremity of the fan blade that is opposite central hub 86. Additionally or alternatively, and as illustrated schematically in Fig. 2 and less schematically in Figs. 7-8, when second thrust-generating device 80 includes prop, or propeller, 84, propeller 84 may include propeller blades 85 that may be operatively attached to and/or may extend from central hub 86.

Hybrid turbine engines 20 also may include a pitch control device 28. Pitch control device 28, when present, may be configured to adjust a pitch of fan blades 83 and/or of propeller blades 85. As an example, pitch control device 28 may be configured to rotate fan blades 83 and/or propeller blades 85 relative to central hub 86 and/or about an elongate axis thereof. At least a portion of pitch control device 28 may be operatively attached to and/or configured to rotate with central hub 86.

Turning now to the schematic illustration of Fig. 2 and the less schematic illustrations of Figs. 4-6, an alternative example of rotary electric machine 60, in the form of a ring drive rotary electric machine 72, is illustrated. In this example of rotary electric machine 60, engine case structure 22 may surround at least a portion of second thrust-generating device 80, such as an outer periphery region 88 of the second thrust-generating device. Under these conditions, at least a portion of rotary electric machine 60 may be operatively attached to outer periphery region 88 and/or to the portion of case structure 22 that surrounds outer periphery region 88.

As an example, stator 68 of rotary electric machine 60 may be operatively attached to engine case structure 22, or to the portion of engine case structure 22 that surrounds outer periphery region 88. As a more specific example, field coil 70 of stator 68 may be operatively attached to the portion of engine case structure 22 that surrounds outer periphery region 88. As another example, rotor 64 of rotary electric machine 60 may be operatively attached to outer periphery region 88. As a more specific example, and when second thrust-generating device 80 includes fan 82, rotor 64 may be operatively attached to outer periphery region 88 of fan blades 83.

In ring drive rotary electric machines 72, the presence of rotor 64 on outer periphery region 88 of second thrust-generating device 80 may introduce additional forces on the second thrust-generating device when compared to thrust-generating devices that are not attached to and/or to not form a portion of a ring drive rotary electric machine. With this in mind, second thrust-generating device 80 and/or ring drive rotary electric machine 72 further may include a stabilization ring 90, as perhaps best illustrated in Figs. 2 and 6. Stabilization ring 90, when present, may be operatively interconnect fan blades 83, a tip region of fan blades 83, and/or outer periphery region 88 of fan blades 83, such as to stabilize fan blades 83 relative to one another and/or to resist the additional forces generated by the presence of ring drive rotary electric machine 72.

As illustrated in solid lines in Figs. 2-4, clutch input 52 may be directly, or directly and operatively, coupled to turbine rotary shaft 34. As also illustrated in solid lines in Figs. 1-4, clutch output 54 may be directly, or directly and operatively, coupled to machine rotary shaft 62.

However, such a configuration is not required, and it is within the scope of the present disclosure that one or more structures may extend between, or operatively couple, clutch input 52 to turbine rotary shaft 34. Additionally or alternatively, one or more structures may extend between, or operatively couple, clutch output 54 to machine rotary shaft 62.

As an example, and as illustrated in dashed lines in Fig. 2 and in solid lines in Figs. 7-8, hybrid turbine engine 20 may include a gear box 110. Gear box 110, when present, may be positioned between first thrust-generating device 30 and second thrust-generating device 80 and/or between turbine rotary shaft 34 and machine rotary shaft 62. In such a configuration, gear box 110 may be configured to provide a predetermined rotational frequency ratio between the turbine rotary shaft and the machine rotary shaft when clutch 50 is in the engaged state. As an example, and when hybrid turbine engine 20 includes second thrust-generating device 80 in the form of propeller 84 (i.e., when the hybrid turbine engine is the turboprop hybrid turbine engine), it may be desirable to decrease a rotational frequency of machine rotary shaft 62 when compared to turbine rotary shaft 34.

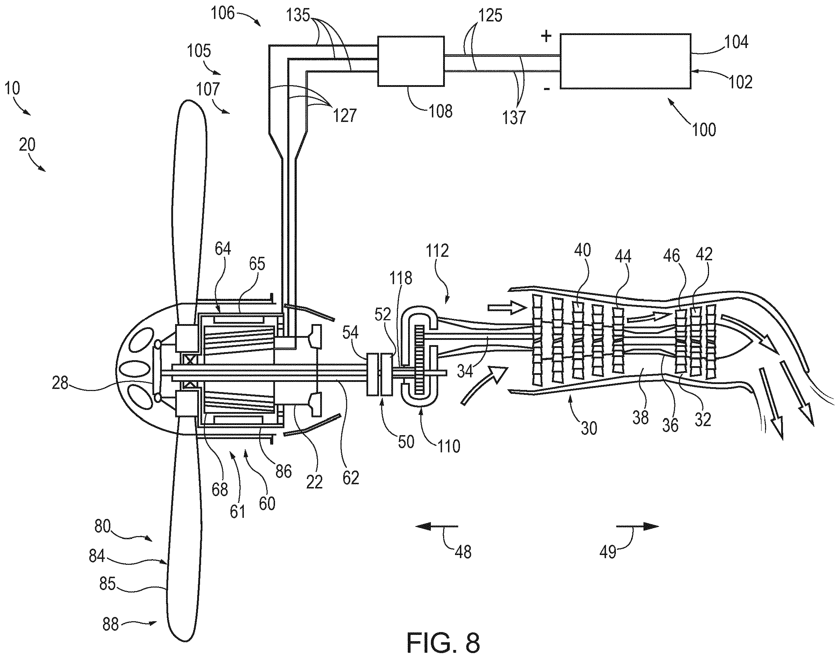

It is within the scope of the present disclosure that gear box 110 may be positioned between, or may operatively couple, turbine rotary shaft 34 and clutch 50. Stated another way, clutch input 52 may be operatively coupled to turbine rotary shaft 34 via gear box 110. Such a configuration is illustrated schematically in Fig. 1 and less schematically in Fig. 8. Under these conditions, gear box 110 may include a gear box input 112, which may be operatively coupled, or directly operatively coupled, to turbine rotary shaft 34. In addition, gear box 110 may include an output stub shaft 118, which may be operatively coupled, or directly operatively coupled, to clutch input 52.

Additionally or alternatively, it is also within the scope of the present disclosure that gear box 110 may be positioned between, or may operatively couple, clutch 50 and machine rotary shaft 62. Stated another way, clutch output 54 may be operatively coupled to machine rotary shaft 62 via gear box 110. Such a configuration is illustrated schematically in Fig. 2 and less schematically in Fig. 7. Under these conditions, gear box 110 may include an input stub shaft 116, which may be operatively coupled, or directly operatively coupled, to clutch output 54. In addition, gear box 110 may include a gear box output 114, which may be operatively coupled, or directly operatively coupled, to machine rotary shaft 62.

As discussed, hybrid turbine engine 20 includes electric power system 100. Electric power system 100 may include any suitable structure that may be configured to provide electric power input 105 to rotary electric machine 60 and also to receive electric power output 107 from the rotary electric machine. As an example, electric power system 100 may include an energy storage device 102 that may be configured to provide electric power input 105 to rotary electric machine 60 and also to receive electric power output 107 from the rotary electric machine. Energy storage device 102 may include any suitable structure that may be configured to selectively store and/or provide electric current. An example of energy storage device 102 includes a battery 104.

As illustrated in dashed lines in Fig. 2 and in solid lines in Figs. 3-4 and 7-8, electric power system 100 also may include a power supply conduit 106. Power supply conduit 106 may extend between energy storage device 102 and rotary electric machine 60, may be configured to convey electric power input 105 from energy storage device 102 and/or to rotary electric machine 60, or to stator 68, and/or may be configured to convey electric power output 107 from rotary electric machine 60, or from stator 68, and/or to energy storage device 102. Examples of power supply conduit 106 include at least one electrical conductor, at least one wire, at least one insulated wire, and/or at least one electrical wire.

As also illustrated in dashed lines in Fig. 2 and in solid lines in Figs. 3-4 and 7-8, electric power system 100 further may include a power conditioner 108, which also may be referred to herein as an electric power converter 108. Power conditioner 108, when present, may be configured to receive an unconditioned electric power input 125 from energy storage device 102, to condition the unconditioned electric power input to produce and/or generate a conditioned electric power input 135, and/or to provide the conditioned electric power input to rotary electric machine 60. Additionally or alternatively, power conditioner 108 may be configured to receive an unconditioned electric power output 127 from rotary electric machine 60, to condition the unconditioned electric power output to produce and/or generate a conditioned electric power output 137, and/or to provide the conditioned electric power output to energy storage device 102. An example of unconditioned electric power input 125 includes a direct current (DC) unconditioned electric power input. Examples of conditioned electric power input 135 include an alternating current (AC) conditioned electric power input, a single phase AC conditioned electric power input, and/or a three phase AC conditioned electric power input. Examples of unconditioned electric power output 127 include an alternating current (AC) unconditioned electric power output, a single phase AC unconditioned electric power output, and/or a three phase AC unconditioned electric power output. An example of conditioned electric power output 137 includes a DC conditioned electric power output.

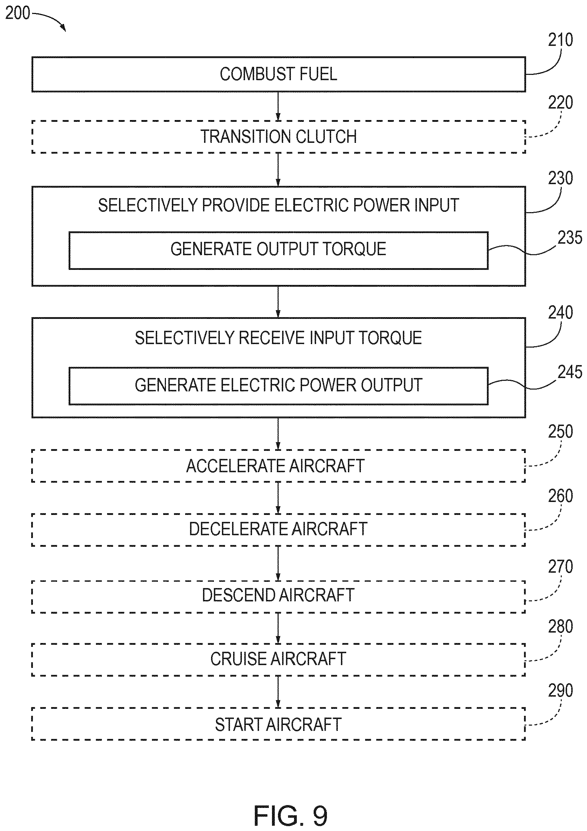

Fig. 9 is a flowchart depicting methods 200, according to the present disclosure, of operating a hybrid turbine engine, such as hybrid turbine engine 20 of Figs. 1-8 and/or aircraft 10 that includes hybrid turbine engine 20. Methods 200 include combusting a fuel at 210 and may include transitioning a clutch at 220. Methods 200 also include selectively providing an electric power input at 230 and selectively receiving an input torque at 240. Methods 200 further may include accelerating an aircraft at 250, decelerating the aircraft at 260, descending the aircraft at 270, cruising the aircraft at 280, and/or starting the aircraft at 290.

Combusting the fuel at 210 may include combusting the fuel within a turbine of a first thrust-generating device. This may include combusting to rotate a turbine rotary shaft of the first thrust-generating device at a turbine rotary shaft rotational frequency. The turbine rotary shaft is operatively coupled to a clutch input of a clutch. The clutch also includes a clutch output, which is operatively coupled to a machine rotary shaft of a rotary electric machine. The machine rotary shaft rotates at a machine rotary shaft rotational frequency, and a second thrust-generating device is operatively coupled to the machine rotary shaft.

Examples of the first thrust-generating device are disclosed herein with reference to first thrust-generating device 30 of Figs. 2-4 and 7-8. Examples of the turbine rotary shaft are disclosed herein with reference to turbine rotary shaft 34 of Figs. 2-4 and 7-8. Examples of the clutch are disclosed herein with reference to clutch 50 of Figs. 2-4 and 7-8. Examples of the rotary electric machine are disclosed herein with reference to rotary electric machine 60 of Figs. 2-4 and 7-8. Examples of the second thrust-generating device are disclosed herein with reference to second thrust-generating device 80 of Figs. 2-4 and 7-8.

Transitioning the clutch at 220 may include transitioning the clutch between an engaged state, in which the clutch input is rotationally coupled to the clutch output, and a disengaged state, in which the clutch input is rotationally decoupled from the clutch output. The transitioning at 220 may include transitioning in any suitable manner and/or based upon any suitable criteria. As an example, the transitioning at 220 may include transitioning based upon an operational state of an aircraft that includes the hybrid turbine engine.

As another example, the transitioning at 220 may include transitioning to the engaged state when the turbine shaft rotational frequency is at least as great as the machine rotary shaft frequency. Such a configuration may permit and/or to facilitate powering of the second thrust-generating device by the first thrust-generating device. Additionally or alternatively, such a configuration may permit and/or facilitate applying the input torque to the rotary electric machine with the first thrust-generating device.

As yet another example, the transitioning at 220 may include transitioning to the disengaged state when the turbine rotary shaft rotational frequency is less than the machine rotary shaft rotational frequency. Such a configuration may permit and/or facilitate powering of the second thrust-generating device, with the rotary electric machine, independent of the first thrust-generating device. Additionally or alternatively, such a configuration may permit application of the input torque by the second thrust-generating device, as discussed in more detail herein.

Selectively providing the electric power input at 230 may include selectively providing the electric power input to the rotary electric machine, with an electric power system, and generating, at 235, an output torque that rotates the machine rotary shaft and the second thrust-generating device. The output torque may be generated by the rotary electric machine responsive to receipt of the electric power input by the rotary electric machine.

Selectively receiving the input torque at 240 may include selectively receiving the input torque, from the second thrust-generating device, with the rotary electric machine, generating, at 245, an electric power output, and providing the electric power output to the electric power system. The electric power output may be generated, by the rotary electric machine, responsive to receipt of the input torque.

The hybrid turbine engine may be operatively attached to an aircraft, and accelerating the aircraft at 250 may include accelerating the aircraft with, via, and/or utilizing the hybrid turbine engine. The accelerating at 250 may be performed during takeoff and/or climb of the aircraft.

The accelerating at 250 may be performed while the clutch is in the engaged state, such as may be accomplished during the transitioning at 220, during the combusting at 210, and during the selectively providing at 230. Under these conditions, the second thrust-generating device 80 of the hybrid turbine engine may be powered by both the first thrust-generating device 30, such as via performing the combusting at 210 in a high thrust output state, and by the electric power system 100, such as via the providing at 230. Such a configuration may permit hybrid turbine engines, according to the present disclosure, to produce a greater amount of overall thrust and/or to have a smaller first thrust-generating device (e.g., turbine) when compared to turbine engines that perform the combusting at 210 but do not perform the transitioning at 220 and the selectively providing at 230.

Alternatively, the accelerating at 250 may be performed while the clutch is in the disengaged state, such as may be accomplished during the transitioning at 220, and during the selectively providing at 230. Under these conditions, the combusting at 210 may include combusting in a low fuel burn state, an idle state, and/or a low thrust output state, such as to decrease fuel consumption of the first thrust-generating device, and the accelerating at 250 may be accomplished, or powered, primarily, or even solely via the second thrust-generating device 80 by the electric power system 100.

Decelerating the aircraft at 260 may include decelerating that aircraft with, via, and/or utilizing the hybrid turbine engine. The decelerating at 260 may be performed, for example, during descent and/or landing of the aircraft. The decelerating at 260 may include decreasing a kinetic energy of the aircraft. The decelerating at 260 may be performed while the clutch is in the disengaged state, such as may be accomplished during the transitioning at 220. During the decelerating at 260, the combusting at 210 may include combusting in the low fuel burn state, the idle state, and/or the low thrust output state, such as to decrease fuel consumption of the first thrust-generating device 30.

During the decelerating at 260, air flow through the second thrust-generating device 80 may rotate the second thrust-generating device, thereby providing a motive force for the selectively receiving at 240. Stated another way, the selectively receiving at 240 may be performed during, or concurrently with, the decelerating at 260, such as to facilitate the generating at 245 and/or to charge, or recharge, the electric power system 100. Stated yet another way, and during the decelerating at 260, a portion of the kinetic energy of the aircraft, which is decreased during the decelerating at 260, may be converted, via the second thrust-generating device and the rotary electric machine, to electrical energy, which may be stored by the electric power system. This may increase an overall efficiency of the aircraft and/or of the hybrid turbine jet engine that powers the aircraft. Such a configuration may be referred to herein as windmill brake mode.

As another example of the decelerating at 260, the selectively providing at 230 may be utilized to generate a reverse-thrust with the second thrust-generating device 80. Such a reverse thrust may be generated by rotating the second thrust-generating device 80 in a reverse-thrust direction and/or by deploying a thrust reverser assembly of the hybrid turbine engine and rotating the second thrust-generating device 80 in a forward-thrust direction. The forward-thrust direction may be a rotational direction, such as one of clockwise and counterclockwise, that generates a forward thrust that urges the aircraft forward. In contrast, the reverse-thrust direction may be a rotational direction, such as the other of clockwise and counterclockwise, that generates a reverse thrust that urges the aircraft backward.

Descending the aircraft at 270 may include decreasing an altitude of the aircraft and/or decreasing a distance between the aircraft and a ground surface that is below the aircraft. The descending at 270 may include decreasing a potential energy, or a gravitational potential energy, of the aircraft, such as via the decrease between the aircraft and the ground surface. The descending at 260 may be performed while the clutch is in the disengaged state, such as may be accomplished during the transitioning at 220. During the descending at 270, the combusting at 210 may include combusting in the low fuel burn state, the idle state, and/or the low thrust output state, such as to decrease fuel consumption of the first thrust-generating device 30.

During the descending at 270, air flow through the second thrust-generating device 80 may rotate the second thrust-generating device, thereby providing a motive force for the selectively receiving at 240. Stated another way, the selectively receiving at 240 may be performed during, or concurrently with, the descending at 270, such as to facilitate the generating at 245 and/or to charge, or recharge, the electric power system 100. Stated yet another way, and during the descending at 270, a portion of the potential energy of the aircraft, which is decreased during the descending at 270, may be converted, via the second thrust-generating device and the rotary electric machine, to electrical energy, which may be stored by the electric power system. This may increase an overall efficiency of the aircraft and/or of the hybrid turbine jet engine that powers the aircraft. Such a configuration may be referred to herein as windmill power generation mode.

Cruising the aircraft at 280 may include cruising the aircraft at a constant, or at least substantially constant, velocity and/or altitude. Methods 200 may include performing the combusting at 210 while the clutch is in the engaged state and during the cruising at 280, such as to power both the second thrust-generating device 80 with the first thrust-generating device 30. Additionally or alternatively, methods 200 may include performing the selectively receiving at 240 during the cruising at 280, such as to provide the electric power output (as a result of the generating at 245) to the electric power system and/or to charge the electric power system. Stated another way, and during the cruising at 280, the first thrust-generating device 30 may be utilized to provide a motive force for the selectively receiving at 240.

Starting the aircraft at 290 may include starting the aircraft with, via, and/or utilizing the rotary electric machine 60. This may include performing the selectively receiving at 240 while the clutch is in the engaged state to rotate the turbine rotary shaft with the rotary electric machine 60 and/or to permit, facilitate, and/or initiate the combusting at 210.

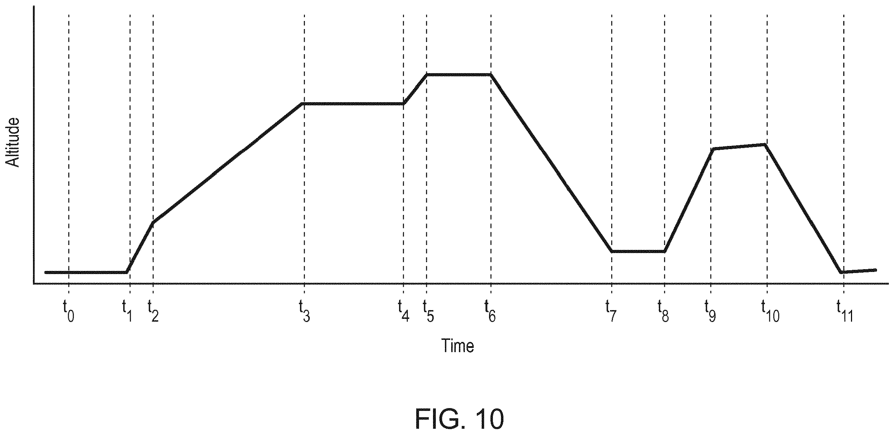

Fig. 10 is a chart illustrating examples of operational modes of a hybrid turbine engine, such as hybrid turbine engine 20 of Figs. 1-8, and/or of an aircraft that includes the hybrid turbine engine. These operational modes are illustrated in the form of an altitude vs. time plot.

In the example of Fig. 10, an aircraft initially may be on the ground and/or may be in an idle state on the ground, such as for times that are less than time to. During at least a portion of this state, the hybrid turbine engine may be off, may not be running, and/or may not be consuming fuel. Subsequently, the hybrid turbine engine may be started, such as is described herein with reference to the starting at 290 of Fig. 9. Once the hybrid turbine engine is started, the hybrid turbine engine may be referred to herein as running and/or as being in a running state.

With the hybrid turbine engine running, the aircraft may initiate take-off, such as from time to to time t₁ in Fig. 10. During take-off, the aircraft may be accelerated utilizing the hybrid turbine engine. This may include acceleration that is facilitated utilizing first thrust-generating device 30 and/or utilizing second thrust-generating device 80 of Figs. 2-8.

As an example, second thrust-generating device 80 may be sized to provide sufficient thrust for take-off alone and/or without being supplemented by first thrust-generating device 30. Under these conditions, first thrust-generating device 30 may be in the idle state, and electric power system 100 may be utilized to provide electric power input 105 to rotary electric machine 60, such as is described herein with reference to the selectively providing at 230 of Fig. 9. Responsive to receipt of the electric power input, the rotary electric machine may produce and/or generate the output torque, which may power second thrust-generating device 80, as described herein with reference to the generating at 235 of Fig. 9. Second thrust-generating device 80 then may generate a thrust that is sufficient to accelerate the aircraft for take-off. In this example, clutch 50 may be in the disengaged state during take-off of the aircraft.

As another example, first thrust-generating device 30 and second thrust-generating device 80 together, or cooperatively, may be utilized to accelerate the aircraft for take-off. Under these conditions, clutch 50 may be in the engaged state and both the first thrust-generating device and the second thrust-generating device may be utilized to generate thrust, such as via simultaneously performing the combusting at 210, the providing at 230, and the generating at 235 of Fig. 9.

Upon reaching sufficient speed, the aircraft may begin to climb, as illustrated between times t₁ and t₃ in Fig. 10. During climb, first thrust-generating device 30 may be utilized alone, second thrust-generating device 80 may be utilized alone, and/or the first thrust-generating device and the second thrust-generating device may be utilized concurrently and/or cooperatively. As an example, and when the first thrust-generating device is sized for cruise efficiency, the first thrust-generating device and the second thrust-generating device may be utilized concurrently and/or cooperatively, and the clutch may be in the engaged state. As another example, and when the first thrust-generating device is sized to provide sufficient thrust for climb, the first thrust-generating device may be utilized alone, and the clutch may be in the disengaged state. As yet another example, and when the second thrust-generating device is sized to provide sufficient thrust for climb, the second thrust-generating device may be utilized alone, and the clutch may be in the disengaged state.

As another example, and as illustrated in Fig. 10, the first thrust-generating device and the second thrust-generating device may be utilized at least partially sequentially. Under these conditions, the first thrust-generating device and the second thrust-generating device initially may be utilized concurrently, with the clutch in the engaged state, to provide maximum thrust, as illustrated between times t₁ and t₂. Once a threshold speed and/or altitude is reached, the second thrust-generating device may be utilized alone, with the clutch in the disengaged sate, such as is illustrated between times t₂ and t₃. Such a configuration may provide the high acceleration that may be needed for take-off and initial climb while, at the same time, decreasing overall fuel consumption.

Once cruise altitude is reached, and as illustrated between times t₃ and t₄, first thrust-generating device 30 may be utilized alone to provide thrust sufficient to maintain the altitude and/or speed of the aircraft. During this time period, the clutch may be in the engaged state and the first thrust-generating device may provide the input torque to the second thrust-generating device and/or to the rotary electric machine, thereby facilitating generation of the output electric current by the rotary electric machine and permitting charging of the electric power system.

If an altitude increase is desired, and as illustrated in Fig. 10 between times t₄ and t₅, the second thrust-generating device may be utilized to provide additional thrust, such as to supplement the first thrust-generating device or in place of the first thrust-generating device. This may permit the altitude increase to be achieved while, at the same time, permitting the first thrust-generating device to remain in an efficient operating regime. Cruise operation them may be continued, as illustrated in Fig. 10 between times t₅ and t₆.

During descent of the aircraft, and as illustrated in Fig. 10 between times t₆ and t₇ and also between times t₁₀ and t₁₁, the clutch may be disengaged and the first thrust-generating device may be in the idle, or low fuel consumption, state. In addition, the second thrust-generating device may receive the input torque due to the decrease in speed and/or altitude, and the corresponding decrease in kinetic and/or potential energy, respectively, thereby permitting generation of the electric power output and facilitating charging, or recharging, of the electric power system.

If it becomes necessary to increase the speed and/or altitude of the aircraft, such as may be due to the aircraft being diverted and/or landing being delayed and as is illustrated between times t₈ and t₉ in Fig. 10, the hybrid turbine engine may be utilized increase the speed and/or altitude of the aircraft. This may be accomplished as described herein with reference to the climb between times t₁ and t₃.

Upon landing the aircraft, such as is illustrated for times greater than t₁₁ in Fig. 10, additional deceleration may be needed. This additional deceleration may be accomplished utilizing a conventional thrust reverse assembly, with the thrust being provided by the first thrust-generating device and/or by the second thrust-generating device. Alternatively, the hybrid turbine engine may not include a conventional thrust reverse assembly. Under these conditions, rotation of the second thrust-generating device may be reversed (i.e., the rotary electric machine may be driven in reverse) to generate the reverse thrust. Such a configuration may permit generation of reverse thrust without increasing, or even utilizing, thrust generated by the first thrust-generating device.

## Claims

1. A hybrid turbine engine (20), comprising:
a first thrust-generating device (30) that includes a turbine (32), wherein the turbine includes a turbine rotary shaft (34);
a clutch (50) including a clutch input (52), which is operatively coupled to the turbine rotary shaft (34), and a clutch output (54), wherein the clutch defines:
(i) an engaged state in which the clutch input (52) is rotationally coupled to the clutch output (54); and
(ii) a disengaged state in which the clutch input (52) is rotationally decoupled from the clutch output (54);
a rotary electric machine (60) including a machine rotary shaft (62), which is operatively coupled to the clutch output (54);
a second thrust-generating device (80) that is operatively coupled to the machine rotary shaft (62); and
an electric power system (100);
wherein the rotary electric machine (60) is configured to:
(i) selectively receive an electric power input (105) from the electric power system (100) and generate an output torque to rotate the second thrust-generating device (80), via the machine rotary shaft (62), responsive to receipt of the electric power input (105); and
(ii) selectively receive an input torque from the machine rotary shaft (62), to generate an electric power output (107) responsive to receipt of the input torque, and to provide the electric power output (107) to the electric power system (100),
wherein the clutch (50) includes a synchronization structure (56) configured to synchronize the clutch input (52) and the clutch output (56) prior to permitting the clutch (50) to transition from the disengaged state to the engaged state, the synchronization structure including a speed controller configured to control a rotational frequency of the rotary electric machine to synchronize the clutch output to the clutch input.

2. The hybrid turbine engine of claim 1, wherein the clutch (50) includes an automatically actuated clutch, wherein the automatically actuated clutch is configured to:
(i) automatically rotationally couple the clutch input (52) to the clutch output (54) when a clutch input rotational frequency is greater than a clutch output rotational frequency; and
(ii) automatically rotationally decouple the clutch input (52) from the clutch output (54) when the clutch input rotational frequency is less than the clutch output rotational frequency.

3. The hybrid turbine engine of claim 1, wherein the clutch (50) includes a selectively actuated clutch, wherein the selectively actuated clutch includes an engagement structure (58) configured to selectively transition the clutch (50) between the engaged state and the disengaged state.

4. The hybrid turbine engine of claim 1, wherein the rotary electric machine (60) includes a rotor (64) that is operatively attached to, and rotates with, at least one of:
(i) the machine rotary shaft (62); and
(ii) the second thrust-generating device (80).

5. The hybrid turbine engine of claim 1, wherein the rotary electric machine (60) includes a stator (68) that is operatively attached to an engine case structure (22) of the hybrid turbine engine (20).

6. The hybrid turbine engine of claim 1, wherein the second thrust-generating device (80) includes a central hub (86), and further wherein at least a portion of the rotary electric machine (60) is internal to the central hub (86).

7. The hybrid turbine engine of claim 6, wherein the second thrust-generating device (80) includes at least one of:
(i) a fan (82) including a plurality of fan blades (83) that extends from the central hub (86); and
(ii) a propeller (84) including a plurality of propeller blades (85) that extends from the central hub (86).

8. The hybrid turbine engine of claim 1, wherein the rotary electric machine (60) is a ring-drive rotary electric machine (72), wherein the hybrid turbine engine (20) includes an engine case structure (22), which surrounds the second thrust-generating device (80), and further wherein a stator (68) of the rotary electric machine (60) is operatively attached to the engine case structure (22).

9. The hybrid turbine engine of claim 8, wherein the second thrust-generating device (80) defines an outer periphery region (88), and further wherein a rotor (64) of the rotary electric machine (60) is operatively attached to the outer periphery region (88).

10. The hybrid turbine engine of claim 1, wherein at least one of:
(i) the clutch input (52) is directly operatively coupled to the turbine rotary shaft (34); and
(ii) the clutch output (54) is directly operatively coupled to the machine rotary shaft (62).

11. The hybrid turbine engine of claim 1, wherein the hybrid turbine engine (20) further includes a gear box (110), wherein the gear box is positioned between the first thrust-generating device (30) and the second thrust-generating device (80), and further wherein the gear box (110) is configured to provide a predetermined rotational frequency ratio between the turbine rotary shaft (34) and the machine rotary shaft (62) when the clutch (50) is in the engaged state.

12. A method (200) of operating a hybrid turbine engine (20), the method comprising:
combusting a fuel within a turbine of a first thrust-generating device (30) to rotate a turbine rotary shaft (34) of the first thrust-generating device (30) at a turbine rotary shaft rotational frequency, wherein the turbine rotary shaft (34) is operatively coupled to a clutch input (52) of a clutch (50), wherein the clutch includes a clutch output (54), which is operatively coupled to a machine rotary shaft (62) of a rotary electric machine (60), wherein the machine rotary shaft (62) rotates at a machine rotary shaft rotational frequency, and further wherein a second thrust-generating device (80) is operatively coupled to the machine rotary shaft (62);
selectively providing an electric power input (105) to the rotary electric machine (60) with an electric power system (100), wherein, responsive to receipt of the electric power input (105) by the rotary electric machine (60), the method further includes generating an output torque that rotates the machine rotary shaft (62) and the second thrust-generating device (80);
selectively receiving an input torque from the second thrust-generating device (80) with the rotary electric machine (60), wherein, responsive to receipt of the input torque by the rotary electric machine (60), the method further includes generating an electric power output (107) with the rotary electric machine (60) and providing the electric power output (107) to the electric power system (100); and
wherein the method further includes synchronizing, by means of a synchronization structure (56) including a speed controller configured to control a rotational frequency of the rotary electric machine, the clutch input (52) and the clutch output (54) prior to permitting the clutch (50) to transition from the disengaged state to the engaged state.

13. The method of claim 12, wherein the clutch (50) defines:
(i) an engaged state in which the clutch input (52) is rotationally coupled to the clutch output (54); and
(ii) a disengaged state in which the clutch input (52) is rotationally decoupled from the clutch output (54);
wherein the method includes:
(i) transitioning (220) the clutch (50) to the engaged state when the turbine rotary shaft rotational frequency is greater than the machine rotary shaft rotational frequency; and
(ii) transitioning the clutch to the disengaged state when the turbine rotary shaft rotational frequency is less than the machine rotary shaft rotational frequency.

14. The method of claim 12, wherein the hybrid turbine engine (20) is operatively attached to an aircraft (10), wherein the method includes accelerating the aircraft, and further wherein, during the accelerating, the method includes performing the selectively providing while the clutch (50) is in an engaged state to power the second thrust-generating device (80) with both the first thrust-generating device (30) and the rotary electric machine (60).

## Patentansprüche

1. Hybrid-Turbinentriebwerk (20), mit:
einer ersten schuberzeugenden Einrichtung (30), die eine Turbine (32) aufweist, wobei die Turbine eine Turbinenrotationswelle (34) aufweist;
eine Kupplung (50), die einen Kupplungseingang (52) aufweist, der wirksam mit der Turbinenrotationswelle (34) gekoppelt ist, und einen Kupplungsausgang (54) aufweist, wobei die Kupplung definiert:
(i) einen Eingriffszustand, in dem der Kupplungseingang (52) rotatorisch mit dem Kupplungsausgang (54) gekoppelt ist; und
(ii) einen Außer-Eingriff-Zustand, in dem der Kupplungseingang (52) rotatorisch von dem Kupplungsausgang (54) entkoppelt ist;
einer elektrischen Rotationsmaschine (60), die eine Maschinenrotationswelle (62) aufweist, die wirksam mit dem Kupplungsausgang (54) gekoppelt ist;
einer zweiten schuberzeugenden Einrichtung (80), die wirksam mit der Maschinenrotationswelle (62) gekoppelt ist; und
einem elektrischen Leistungssystem (100);
wobei die elektrische Rotationsmaschine (60) dazu konfiguriert ist:
(i) wahlweise eine elektrische Eingangsleistung (105) von dem elektrischen Leistungssystem (100) zu empfangen, und ein Ausgangsmoment zu erzeugen, um die zweite schuberzeugende Einrichtung (80) über die Maschinenrotationswelle (62) zu rotieren, in Antwort auf das Empfangen der elektrischen Leistungseingabe (105); und
(ii) wahlweise ein Eingangsmoments von der Maschinenrotationswelle (62) zu empfangen, um eine elektrische Leistungsausgabe (107) in Antwort auf das Empfangen des Eingangsmoments zu erzeugen, und die elektrische Leistungsausgabe (107) an das elektrische Leistungssystem (100) bereitzustellen,
wobei die Kupplung (50) eine Synchronisationsstruktur (56) aufweist, die dazu konfiguriert ist, den Kupplungseingang (52) und den Kupplungsausgang (56) zu synchronisieren, bevor es erlaubt wird, dass die Kupplung (50) von dem Eingangs-Ausgangs-Zustand zu dem Eingriffszustand übergeht, wobei die Synchronisationsstruktur eine Geschwindigkeitssteuerung aufweist, die dazu konfiguriert ist, eine Rotationsfrequenz der elektrischen Rotationsmaschine dazu zu steuern, den Kupplungsausgang mit dem Kupplungseingang zu synchronisieren.

2. Hybrid-Turbinentriebwerk nach Anspruch 1, wobei die Kupplung (50) eine automatisch betätigte Kupplung aufweist, wobei die automatisch betätigte Kupplung dazu konfiguriert ist:
(i) automatisch den Kupplungseingang (52) mit dem Kupplungsausgang (54) rotatorisch zu kuppeln, wenn eine Kupplungseingangsrotationsfrequenz größer als eine Kupplungsausgangsrotationsfrequenz ist; und
(ii) automatisch den Kupplungseingang (52) von dem Kupplungsausgang (54) rotatorisch zu entkuppeln, wenn die Kupplungseingangsrotationsfrequenz geringer als die Kupplungsausgangsrotationsfrequenz ist.

3. Hybrid-Turbinentriebwerk nach Anspruch 1, wobei die Kupplung (50) eine wahlweise betätigte Kupplung aufweist, wobei die wahlweise betätigte Kupplung eine Eingriffsstruktur (58) aufweist, die dazu konfiguriert ist, die Kupplung (50) wahlweise zwischen dem Eingangszustand und dem Außer-Eingriff-Zustand zu überführen.

4. Hybrid-Turbinentriebwerk nach Anspruch 1, wobei die elektrische Rotationsmaschine (60) einen Rotor (64) aufweist, der wirksam angebracht ist an und rotiert mit mindestens einem von:
(i) der Maschinenrotationswelle (62); und
(ii) der zweiten schuberzeugenden Einrichtung (80).

5. Hybrid-Turbinentriebwerk nach Anspruch 1, wobei die elektrische Rotationsmaschine (60) einen Stator (68) aufweist, der wirksam an einer Turbinengehäusestruktur (22) des Hybrid-Turbinentriebwerks (20) angebracht ist.

6. Hybrid-Turbinentriebwerk nach Anspruch 1, wobei die zweite schuberzeugende Einrichtung (80) eine zentrale Nadel (86) aufweist, und wobei des Weiteren zumindest ein Teil der elektrischen Rotationsmaschine (60) intern zu der zentralen Nadel (86) ist.

7. Hybrid-Turbinentriebwerk nach Anspruch 6, wobei die zweite Vorrichtung (80) mindestens eines aufweist von:
(i) einem Fan (82), der eine Mehrzahl von Zahnschaufeln (83) aufweist, die sich von der zentralen Nadel (86) aus erstrecken; und
(ii) einem Propeller (84), der eine Mehrzahl von Propellerschaufeln (85) aufweist, die sich von der zentralen Nadel (86) aus erstrecken.

8. Hybrid-Turbinentriebwerk nach Anspruch 1, wobei die elektrische Rotationsmaschine (60) eine ringgetriebene elektrische Rotationsmaschine (72) ist, wobei das Hybrid-Turbinentriebwerk (20) eine Triebwerksgehäusestruktur (22) aufweist, die die zweite Vorschub erzeugte Einrichtung (80) umgibt, und wobei des Weiteren ein Stator (68) der elektrischen Rotationsmaschine (60) wirksam an der Triebwerksgehäusestruktur (22) angebracht ist.

9. Hybrid-Turbinentriebwerk nach Anspruch 8, wobei die zweite schuberzeugende Vorrichtung (80) einen Außenumfangsbereich (88) definiert, und wobei des Weiteren ein Rotor (64) der elektrischen Rotationsmaschine (60) wirksam an dem Außenumfangsbereich (88) angebracht ist.

10. Hybrid-Turbinentriebwerk nach Anspruch 1, wobei mindestens eines von:
(i) der Kupplungseingang (52) ist direkt wirksam mit der Turbinenrotationswelle (34) gekoppelt; und
(ii) der Kupplungsausgang (54) ist direkt wirksam mit der Maschinenrotationswelle (62) gekoppelt.

11. Hybrid-Turbinentriebwerk nach Anspruch 1, wobei das Hybrid-Turbinentriebwerk (20) des Weiteren eine Getriebeeinheit (10) aufweist, die dazu konfiguriert ist, ein vorbestimmtes Rotationsfrequenzverhältnis zwischen der Turbinenrotationswelle (34) und der Maschinenrotationswelle (62) bereitzustellen, wenn die Kupplung (50) in dem Eingriffszustand ist.

12. Verfahren (200) zum Betreiben eines Hybrid-Turbinentriebwerks (20), wobei das Verfahren aufweist:
Verbrennen eines Treibstoffs innerhalb einer Turbine einer ersten schuberzeugenden Einrichtung (30), um eine Turbinenrotationswelle (34) der ersten schuberzeugenden Einrichtung (30) mit einer Turbinenrotationswellenfrequenz zu rotieren, wobei die Turbinenrotationswelle (34) wirksam mit einem Kupplungseingang (52) einer Kupplung (50) gekoppelt ist, wobei die Kupplung einen Kupplungsausgang (54) aufweist, der wirksam mit einer Maschinenrotationswelle (62) einer elektrischen Rotationsmaschine (60) gekoppelt ist, wobei die Maschinenrotationswelle (62) mit einer Maschinenrotationswellenfrequenz rotiert, und wobei des Weiteren eine zweite schuberzeugende Einrichtung (80) wirksam mit der Maschinenrotationswelle (62) gekoppelt ist;
wahlweises Bereitstellen einer elektrischen Leistungseingabe (105) an die elektrische Rotationsmaschine (60) mit einem elektrischen Leistungssystem (100), wobei, in Antwort auf das Empfangen der elektrischen Leistungseingabe (105) durch die elektrische Rotationsmaschine (60), das Verfahren des Weiteren das Erzeugen eines Ausgangsmoments aufweist, das die Maschinenrotationswelle (62) und die zweite schuberzeugende Einrichtung (80) rotiert;
wahlweises Empfangen eines Eingangsmoments von der zweiten schuberzeugenden Einrichtung (80) der elektrischen Rotationsmaschine (60), wobei, in Antwort auf das Aufnehmen des Eingangsmoments durch die elektrische Rotationsmaschine (60) das Verfahren des Weiteren das Erzeugen einer elektrischen Leistungsausgabe (107) mit der elektrischen Rotationsmaschine (60) und das Bereitstellen der elektrischen Leistungsausgabe (107) an das elektrische Leistungssystem (100) aufweist; und
wobei das Verfahren des Weiteren das Synchronisieren, mittels einer Synchronisationsstruktur (56), die eine Geschwindigkeitssteuerung aufweist, die dazu konfiguriert ist, eine Rotationsfrequenz der elektrischen Rotationsmaschine (60) zu steuern, des Kupplungseingangs (50) und des Kupplungsausgangs (54) aufweist bevor der Kupplung (50) erlaubt wird, von dem Außer-Eingriff-Zustand zu dem Eingriffszustand überzugehen.

13. Verfahren nach Anspruch 12, wobei die Kupplung (50) definiert:
(i) einen Eingriffszustand, in dem der Kupplungseingang (52) rotatorisch mit dem Kupplungsausgang (54) gekoppelt ist; und
(ii) einen Außer-Eingriff-Zustand, bei dem der Kupplungseingang (52) rotatorisch von dem Kupplungsausgang (54) entkoppelt ist;
wobei das Verfahren aufweist:
(i) Überführen (220) der Kupplung (50) in den Eingriffszustand, wenn die Turbinenrotationswellenfrequenz größer als die Maschinenrotationswellenfrequenz ist; und
(ii) Überführen der Kupplung in den Außer-Eingriff-Zustand, wenn die Turbinenrotationswellenfrequenz geringer als die Maschinenrotationswellenfrequenz ist.

14. Verfahren nach Anspruch 12, wobei das Hybrid-Turbinentriebwerk (20) wirksam an ein Luftfahrzeug (10) angebracht ist, wobei das Verfahren das Beschleunigen des Luftfahrzeugs aufweist, und wobei des Weiteren, während des Beschleunigens, das Verfahren das Durchführen des wahlweisen Bereitstellens aufweist, während die Kupplung (50) in einem Eingriffszustand ist, um die zweite schuberzeugende Einrichtung (80) mit sowohl der ersten schuberzeugenden Einrichtung (30) als auch der elektrischen Rotationsmaschine (60) anzutreiben.

## Revendications

1. Moteur à turbine hybride (20), comprenant :
un premier dispositif de génération de poussée (30) qui comporte une turbine (32), dans lequel la turbine comporte un arbre rotatif de turbine (34) ;
un embrayage (50) comportant une entrée d'embrayage (52), qui est fonctionnellement couplée à l'arbre rotatif de turbine (34), et une sortie d'embrayage (54), dans lequel l'embrayage définit :
(i) un état en prise dans lequel l'entrée d'embrayage (52) est couplée en rotation à la sortie d'embrayage (54) ; et
(ii) un état hors prise dans lequel l'entrée d'embrayage (52) est découplée en rotation de la sortie d'embrayage (54) ;
une machine électrique rotative (60) comportant un arbre rotatif de machine (62), qui est fonctionnellement couplé à la sortie d'embrayage (54) ;
un second dispositif de génération de poussée (80) qui est fonctionnellement couplé à l'arbre rotatif de machine (62) ; et
un système d'alimentation en énergie électrique (100) ;
dans lequel la machine électrique rotative (60) est configurée pour :
(i) recevoir sélectivement une entrée d'énergie électrique (105) provenant du système d'alimentation en énergie électrique (100) et générer un couple de sortie pour faire tourner le second dispositif de génération de poussée (80), via l'arbre rotatif de machine (62), en réponse à la réception de l'entrée d'énergie électrique (105) ; et
(ii) recevoir sélectivement un couple d'entrée provenant de l'arbre rotatif de machine (62), pour générer une sortie d'énergie électrique (107) en réponse à la réception du couple d'entrée, et pour fournir la sortie d'énergie électrique (107) au système d'alimentation en énergie électrique (100),
dans lequel l'embrayage (50) comporte une structure de synchronisation (56) configurée pour synchroniser l'entrée d'embrayage (52) et la sortie d'embrayage (56) avant d'autoriser l'embrayage (50) à passer de l'état hors prise à l'état en prise, la structure de synchronisation comportant un dispositif de commande de vitesse configuré pour commander une fréquence de rotation de la machine électrique rotative afin de synchroniser la sortie d'embrayage sur l'entrée d'embrayage.

2. Moteur à turbine hybride selon la revendication 1, dans lequel l'embrayage (50) comporte un embrayage actionné automatiquement, dans lequel l'embrayage actionné automatiquement est configuré pour :
(i) coupler automatiquement en rotation l'entrée d'embrayage (52) à la sortie d'embrayage (54) lorsqu'une fréquence de rotation d'entrée d'embrayage est supérieure à une fréquence de rotation de sortie d'embrayage ; et
(ii) découpler automatiquement en rotation l'entrée d'embrayage (52) de la sortie d'embrayage (54) lorsque la fréquence de rotation d'entrée d'embrayage est inférieure à la fréquence de rotation de sortie d'embrayage.

3. Moteur à turbine hybride selon la revendication 1, dans lequel l'embrayage (50) comporte un embrayage actionné sélectivement, dans lequel l'embrayage actionné sélectivement comporte une structure de mise en prise (58) configurée pour faire passer sélectivement l'embrayage (50) entre l'état en prise et l'état hors prise.

4. Moteur à turbine hybride selon la revendication 1, dans lequel la machine électrique rotative (60) comporte un rotor (64) qui est fonctionnellement fixé à, et tourne avec, au moins l'un de :
(i) l'arbre rotatif de machine (62) ; et
(ii) le second dispositif de génération de poussée (80).

5. Moteur à turbine hybride selon la revendication 1, dans lequel la machine électrique rotative (60) comporte un stator (68) qui est fonctionnellement fixé à une structure de carter moteur (22) du moteur à turbine hybride (20).

6. Moteur à turbine hybride selon la revendication 1, dans lequel le second dispositif de génération de poussée (80) comporte un moyeu central (86), et en outre dans lequel au moins une partie de la machine électrique rotative (60) est interne au moyeu central (86).

7. Moteur à turbine hybride selon la revendication 6, dans lequel le second dispositif de génération de poussée (80) comporte au moins l'un de :
(i) un ventilateur (82) comportant une pluralité de pales de ventilateur (83) qui s'étendent depuis le moyeu central (86) ; et
(ii) une hélice (84) comportant une pluralité de pales d'hélice (85) qui s'étendent depuis le moyeu central (86).

8. Moteur à turbine hybride selon la revendication 1, dans lequel la machine électrique rotative (60) est une machine électrique rotative à entraînement annulaire (72), dans lequel le moteur à turbine hybride (20) comporte une structure de carter moteur (22), qui entoure le second dispositif de génération de poussée (80), et dans lequel en outre un stator (68) de la machine électrique rotative (60) est fonctionnellement fixé à la structure de carter moteur (22).

9. Moteur à turbine hybride selon la revendication 8, dans lequel le second dispositif de génération de poussée (80) définit une région périphérique extérieure (88), et en outre dans lequel un rotor (64) de la machine électrique rotative (60) est fonctionnellement fixé à la région périphérique extérieure (88).

10. Moteur à turbine hybride selon la revendication 1, dans lequel au moins l'un de :
(i) l'entrée d'embrayage (52) est directement couplée fonctionnellement à l'arbre rotatif de turbine (34) ; et
(ii) la sortie d'embrayage (54) est directement couplée fonctionnellement à l'arbre rotatif de machine (62).

11. Moteur à turbine hybride selon la revendication 1, dans lequel le moteur à turbine hybride (20) comporte en outre une boîte de vitesses (110), dans lequel la boîte de vitesses est positionnée entre le premier dispositif de génération de poussée (30) et le second dispositif de génération de poussée (80), et en outre dans lequel la boîte de vitesses (110) est configurée pour fournir un rapport de fréquence de rotation prédéterminé entre l'arbre rotatif de turbine (34) et l'arbre rotatif de machine (62) lorsque l'embrayage (50) est dans l'état en prise.

12. Procédé (200) de fonctionnement d'un moteur à turbine hybride (20), le procédé comprenant :
la combustion d'un carburant dans une turbine d'un premier dispositif de génération de poussée (30) pour faire tourner un arbre rotatif de turbine (34) du premier dispositif de génération de poussée (30) à une fréquence de rotation d'arbre rotatif de turbine, dans lequel l'arbre rotatif de turbine (34) est couplé fonctionnellement à une entrée d'embrayage (52) d'un embrayage (50), dans lequel l'embrayage comporte une sortie d'embrayage (54), qui est couplée fonctionnellement à un arbre rotatif de machine (62) d'une machine électrique rotative (60), dans lequel l'arbre rotatif de machine (62) tourne à une fréquence de rotation d'arbre rotatif de machine, et en outre dans lequel un second dispositif de génération de poussée (80) est couplé fonctionnellement à l'arbre rotatif de machine (62) ;
la fourniture sélective d'une entrée d'énergie électrique (105) à la machine électrique rotative (60) avec un système d'alimentation en énergie électrique (100), dans lequel, en réponse à la réception de l'entrée d'énergie électrique (105) par la machine électrique rotative (60), le procédé comporte en outre la génération d'un couple de sortie qui fait tourner l'arbre rotatif de machine (62) et le second dispositif de génération de poussée (80) ;
la réception sélective d'un couple d'entrée provenant du second dispositif de génération de poussée (80) avec la machine électrique rotative (60), dans lequel, en réponse à la réception du couple d'entrée par la machine électrique rotative (60), le procédé comporte en outre la génération d'une sortie d'énergie électrique (107) avec la machine électrique rotative (60) et la fourniture de la sortie d'énergie électrique (107) au système d'alimentation en énergie électrique (100) ; et
dans lequel le procédé comporte en outre la synchronisation, au moyen d'une structure de synchronisation (56) comportant un dispositif de commande de vitesse configuré pour commander une fréquence de rotation de la machine électrique rotative, de l'entrée d'embrayage (52) et de la sortie d'embrayage (54) avant d'autoriser l'embrayage (50) à passer de l'état hors prise à l'état en prise.

13. Procédé selon la revendication 12, dans lequel l'embrayage (50) définit :
(i) un état en prise dans lequel l'entrée d'embrayage (52) est couplée en rotation à la sortie d'embrayage (54) ; et
(ii) un état hors prise dans lequel l'entrée d'embrayage (52) est découplée en rotation de la sortie d'embrayage (54) ;
dans lequel le procédé comporte :
(i) le passage (220) de l'embrayage (50) à l'état en prise lorsque la fréquence de rotation d'arbre rotatif de turbine est supérieure à la fréquence de rotation d'arbre rotatif de machine ; et
(ii) le passage de l'embrayage à l'état hors prise lorsque la fréquence de rotation d'arbre rotatif de turbine est inférieure à la fréquence de rotation d'arbre rotatif de machine.

14. Procédé selon la revendication 12, dans lequel le moteur à turbine hybride (20) est fonctionnellement fixé à un aéronef (10), dans lequel le procédé comporte l'accélération de l'aéronef, et en outre dans lequel, pendant l'accélération, le procédé comporte l'exécution de la fourniture sélective alors que l'embrayage (50) est dans un état en prise pour alimenter en énergie le second dispositif de génération de poussée (80) avec à la fois le premier dispositif de génération de poussée (30) et la machine électrique rotative (60).
